(19) Europäisches Patentamt

European Patent Office

Office européen des brevets

(11) **EP 2 101 966 B1**

(12) **EUROPEAN PATENT SPECIFICATION**

(45) Date of publication and mention
of the grant of the patent:
**22.12.2010 Bulletin 2010/51**

(51) Int Cl.:
***B26B 21/40*** (2006.01)

(21) Application number: **08700209.3**

(22) Date of filing: **07.01.2008**

(86) International application number:
**PCT/IB2008/050033**

(87) International publication number:
**WO 2008/084429 (17.07.2008 Gazette 2008/29)**

(54) **RAZOR CARTRIDGE MEASUREMENT APPARATUS**

MESSGERÄT FÜR RASIERKLINGEN

APPAREIL DE MESURE DE CARTOUCHE DE RASOIR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.01.2007 US 653054**

(43) Date of publication of application:
**23.09.2009 Bulletin 2009/39**

(73) Proprietor: **The Gillette Company
Boston, MA 02199 (US)**

(72) Inventors:
• **SIMONIS DE CLOKE, Cinzia
Arlington, Massachusetts 02474 (US)**
• **HOWELL, Daren, Mark
Reading Berkshire RG20QE (GB)**
• **WAIN, Kevin, James
Reading Berkshire RG5 3PD (GB)**

(74) Representative: **Chandrani, Vandita
Procter & Gamble
Patent Department
Technical Centres Limited
Rusham Park
Whitehall Lane
Egham, Surrey TW20 9NW (GB)**

(56) References cited:
WO-A-2004/018161      WO-A-2005/049289
FR-A- 2 749 793      US-A- 5 493 919

## EP 2 101 966 B1

**Description**

FIELD OF THE INVENTION

The present invention relates to a razor cartridge measurement apparatus and more particularly to a razor cartridge measurement apparatus which measures loads applied to a razor cartridge and the position of the cartridge while the loads are applied.

BACKGROUND OF THE INVENTION

Many techniques have been used to evaluate razor cartridges. For example, razor cartridges have been given to consumer groups for evaluation. These groups are asked to shave with a razor cartridge and respond to numerous questions about the razor cartridge. Such techniques are valuable for evaluating razor cartridges. A typical questionnaire will include one or more questions about shaving comfort. One drawback associated with such techniques is the cost and time associated with forming the consumer group, conducting the shaving exercise, having the consumer fill out the questionnaire and then tabulating the results.

It is known to incorporate sensors into razors. Document WO 2004/018161 A2 shows a razor with a force sensor and angular rate sensors. Document FR2749793 A1 shows an electric shaves with an optical sensor for measuring drag and friction. These sensors are typically utilized to detect when a certain force threshold has been reached. The concept of the razor with a force sensor is to warn users that they are applying too much force to the skin during shaving.

It would be beneficial to provide an apparatus allowing for razor cartridge evaluation without the need for a consumer questionnaire.

It would be beneficial to provide an apparatus allowing for razor cartridge evaluation that can measure the loads being applied to the razor cartridge during shaving.

It would be beneficial to provide an apparatus allowing for razor cartridge evaluation that can measure the orthogonal loads being applied to the razor cartridge during shaving and then use those measurements to calculate drag and friction.

SUMMARY OF THE INVENTION

In accordance with the present invention a razor cartridge measurement apparatus is provided. The apparatus comprises a first device for measuring a first load applied to a razor cartridge in a first direction and a second load applied to the razor cartridge in a second direction different than the first direction. The apparatus comprises a second device for measuring an angle at which the razor cartridge is positioned relative to a predetermined direction.

In accordance with an aspect of the invention the apparatus is mounted on a handle.

The first device may comprise a load cell. The load cell measures two loads orthogonal to each other. The second device may comprise a rotation sensor such as a potentiometer, or one or multiple displacement sensors for measuring the angle.

The predetermined direction may be the second direction. The predetermined direction may be the first direction. The second direction is substantially orthogonal to the first direction.

In accordance with another aspect of the invention the apparatus may comprise a processor. The processor receives input from the first device and the second device. The input from the first device may include the first load and the second load. The input from the second device may include the angle. The input from the second device may include a distance measurement. The processor may compute a drag for the razor cartridge based on the inputs. The processor may compute a friction for the razor cartridge based on the inputs. The processor may compute a normal load for the razor cartridge based on the inputs.

BRIEF DESCRIPTION OF THE DRAWINGS

While the specification concludes with claims particularly pointing out and distinctly claiming the subject matter which is regarded as forming the present invention, it is believed that the invention will be better understood from the following description taken in conjunction with the accompanying drawings.

FIG. 1 is a side view of the apparatus of the present invention mounted on a handle and shown with a razor cartridge.
FIG. 2 is a rear view of the apparatus of FIG. 1 mounted on a handle and shown with a razor cartridge.
FIG. 3 is a side view of the apparatus FIG. 1 including a processor.
FIG. 4 is a side view of another apparatus of the present invention mounted on a handle and shown with a razor cartridge.

FIG. 5 is a rear view of the apparatus of FIG. 4 mounted on a handle and shown with a razor cartridge.

FIG. 6 is a side view of another apparatus of the present invention mounted on a handle and shown with a razor cartridge.

FIG. 7 is a rear view of the apparatus of FIG. 6 mounted on a handle and shown with a razor cartridge.

FIG. 8 is a side view of another apparatus of the present invention mounted on a handle and shown with a razor cartridge.

FIG. 9 is a rear view of the apparatus of FIG. 8 mounted on a handle and shown with a razor cartridge.

DETAILED DESCRIPTION OF THE INVENTION

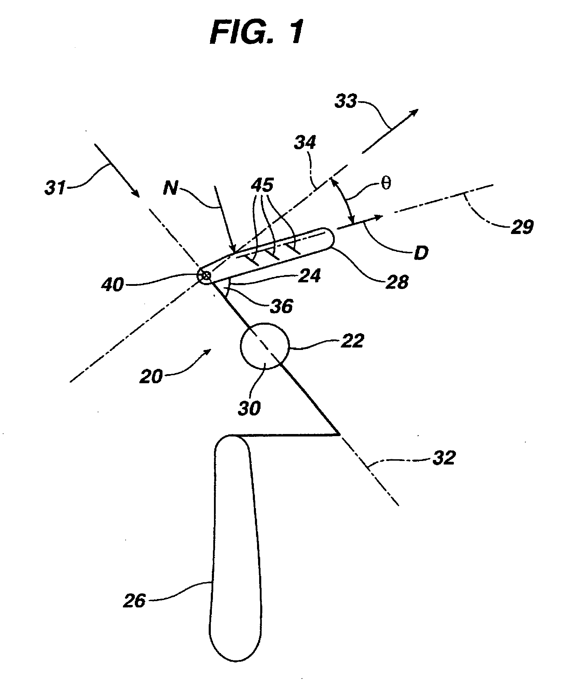

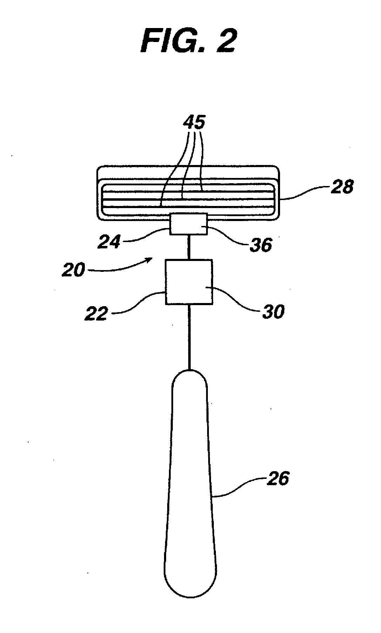

Referring now to FIGS. 1-2 there is shown a razor cartridge measurement apparatus 20. Apparatus 20 comprises a first device 22 and a second device 24. The apparatus 20 is shown mounted on a handle 26. A razor cartridge 28 is mounted on apparatus 20 opposite to the handle 26. Razor cartridge 28 rotates about pivot 40. Razor cartridge 28 includes a cutting plane 29. Cutting plane 29 is formed by the edges of blades 45 housed within razor cartridge 28.

First device 22 comprises a load cell 30. Load cell 30 measures a first or compression load 31 in a first direction 32 and a second or bending load 33 in a second direction 34 which is different from the first direction 32. Preferably, the second direction 34 is orthogonal to the first direction 32. First direction 32 and second direction 34 establish a reference frame for the apparatus 20.

Preferably, the load cell measures loads in two directions which are orthogonal to one another. Alternative load cells may be used that measure additional loads in additional directions. While less preferred, the first device may comprise two load cells each measuring a single load and being arranged to measure the loads in directions which are orthogonal to one another.

Second device 24 measures directly or indirectly the angle $\Theta$ of cartridge 28 relative to a predetermined direction. In this instance the predetermined direction is the second direction 34. However, other directions may be selected as the predetermined direction as it serves as a known entity from which a measurement can be taken. In the apparatus 20 shown, the second device 24 comprises a displacement sensor 36. The displacement sensor 36 measures the angle $\Theta$ indirectly by first measuring the distance the cartridge 28 moves relative to the second direction 34. The distance cartridge 28 moves can then be used to calculate or determine the angle $\Theta$.

From the measurements of the first or compression load 31, the second or bending load 33 and the angle $\Theta$, the normal load N and drag D on the cartridge 28 can be calculated. The drag D is the load placed on the cartridge 28 that is parallel to the cutting plane 29. The normal load N is the load placed on the cartridge 28 that is orthogonal to the cutting plane 29.

As the normal load N and drag D are applied to razor cartridge 28, razor cartridge 28 will rotate or swivel about pivot 40. Devices 22 and 24 together measure the first load 31, second load 33 and the angle $\Theta$ as the normal load N and drag D are applied to the cartridge 28.

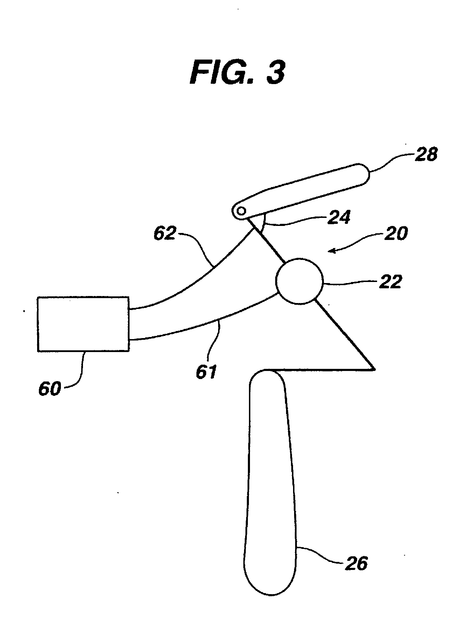

Referring now to FIG 3, a processor 60 is shown as part of apparatus 20. Processor 60 is connected to first device 22 and second device 24 via wires 61 and 62. Processor 60 comprises any known device that can compute and store values based on a plurality of inputs. A suitable processor is a conventional computer.

In use a razor cartridge 28 is mounted on apparatus 20 which in turn is mounted on handle 26. As a user holds handle 26 and shaves with razor cartridge 28, first device 22 and second device 24 measure a plurality of inputs. These inputs comprise first load 31, second load 33 and distance the cartridge 28 moves relative to the second direction 34. The measured inputs of first load, second load and distance are sent to and received by processor 60. The processor 60 uses the distance measurements received from device 24 to calculate the angle $\Theta$.

The processor 60 computes drag, normal load and friction based on the following formulas.

$$Drag = second\ load\ 33\ x\ cosine(\Theta) + first\ load\ 31\ x\ sine(\Theta)$$

$$Normal\ Load = first\ load\ 31\ x\ cosine(\Theta) - second\ load\ 33\ x\ sine(\Theta)$$

$$Friction = Drag/Normal\ Load$$

Using the apparatus 20 several razor cartridges can be evaluated and compared based on drag, normal load and/or friction.

Instead of connecting devices 22 and 24 to processor 60 directly with wires, the inputs can be sent by other methods. For example, the inputs can be temporarily stored in devices 22 and 24 and downloaded to a processor at a later time. The inputs may also be sent by first and second devices by wireless communication to the processor.

The first direction 32 and the second direction 34 may or may not extend through pivot 40. In the apparatus 20 of FIGS. 1-3 the first direction 32 and the second direction 34 extend through pivot 40.

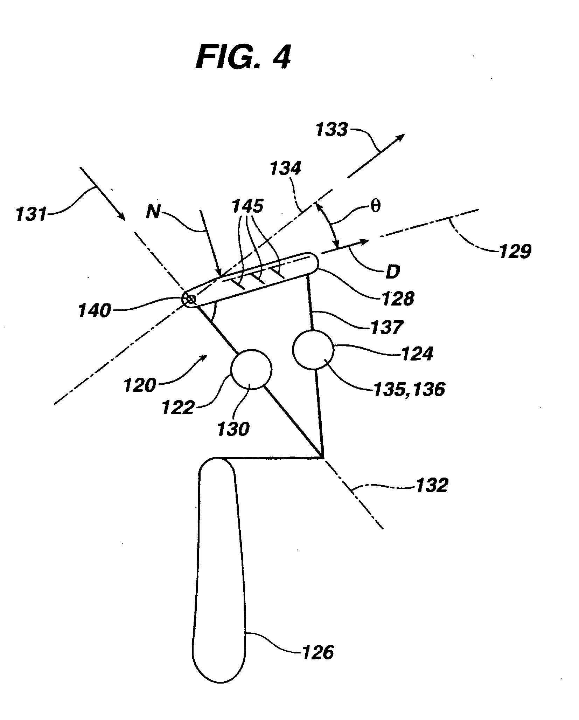

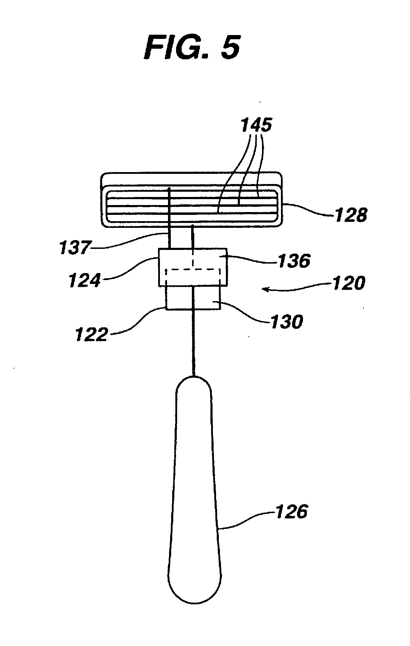

Referring now to FIGS. 4-5, there is shown another razor cartridge measurement apparatus 120. Apparatus 120 comprises a first device 122 and a second device 124. The apparatus 120 is shown mounted on a handle 126. A razor cartridge 128 is mounted on apparatus 120 opposite to the handle 126. Razor cartridge 128 rotates about pivot 140. Razor cartridge 128 includes a cutting plane 129. Cutting plane 129 is formed by the edges of blades 145 housed within razor cartridge 128.

First device 122 comprises a load cell 130. Load cell 130 measures a first or compression load 131 in a first direction 132 and a second or bending load 133 in a second direction 134 which is different from the first direction 132. Preferably, the second direction 134 is orthogonal to the first direction 132. First direction 132 and second direction 134 establish a reference frame for the apparatus 120.

Second device 124 comprises a rotation sensor 135. Rotation sensor 135 comprises a rotary potentiometer 136. Rotary potentiometer 136 measures directly the angle Θ of cartridge 128 relative to the second direction 134. The rotary potentiometer 136 is connected to cartridge 128 by a linkage 137.

From the measurements of the first or compression load 131, the second or bending load 133 and the angle Θ, the normal load N and drag D on the cartridge 128 can be calculated. The drag D is the load placed on the cartridge 128 that is parallel to the cutting plane 129. The normal load N is the load placed on the cartridge 128 that is orthogonal to the cutting plane 129.

As the normal load N and drag D are applied to razor cartridge 128, razor cartridge 128 will rotate or swivel about pivot 140. Devices 122 and 124 together measure the first load 131, second load 133 and the angle Θ as the normal load N and drag D are applied to the cartridge 128.

In use a razor cartridge 128 is mounted on apparatus 120 which in turn is mounted on handle 126. As a user holds handle 126 and shaves with razor cartridge 128, first device 122 and second device 124 measure a plurality of inputs. These inputs comprise first load 131, second load 133 and angle Θ. The measured inputs of first load, second load and distance are sent to and received by a processor such as processor 60 shown in FIG. 3.

The processor computes drag, normal load and friction based on the following formulas.

$$\text{Drag} = \text{second load } 133 \times \cos(\Theta) + \text{first load } 131 \times \sin(\Theta)$$

$$\text{Normal Load} = \text{first load } 131 \times \cos(\Theta) - \text{second load } 133 \times \sin(\Theta)$$

$$\text{Friction} = \text{Drag/Normal Load}$$

Using the apparatus 120 several razor cartridges can be evaluated and compared based on drag, normal load and/or friction.

Instead of connecting devices 122 and 124 to a processor directly with wires, the inputs can be sent by other methods. For example, the inputs can be temporarily stored in devices 122 and 124 and downloaded to a processor at a later time. The inputs may also be sent by first and second devices by wireless communication to the processor.

The first direction 132 and the second direction 134 may or may not extend through pivot 140. In the apparatus 120 of FIGS. 4-5 the first direction 132 and the second direction 134 extend through pivot 140.

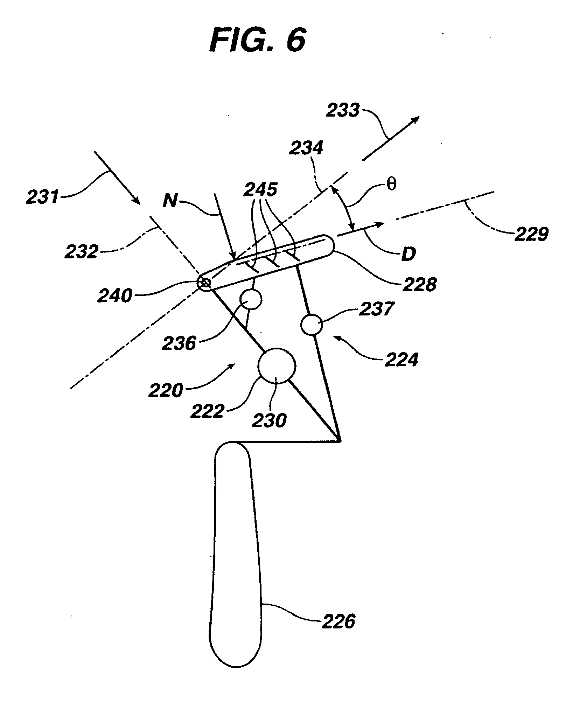

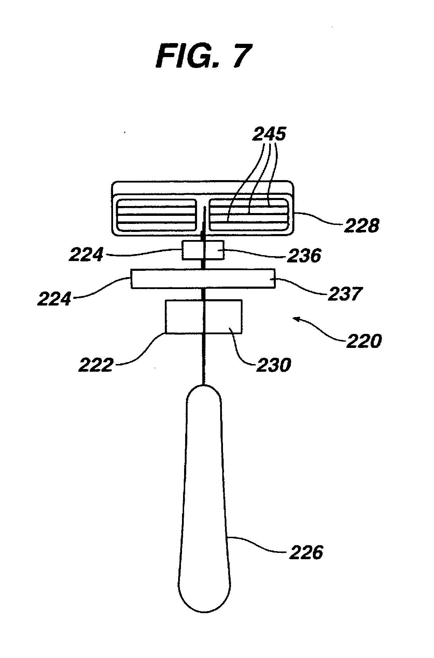

Referring now to FIGS. 6-7, there is shown another razor cartridge measurement apparatus 220. Apparatus 220 comprises a first device 222 and a second device 224. The apparatus 220 is shown mounted on a handle 226. A razor cartridge 228 is mounted on apparatus 220 opposite to the handle 226. Razor cartridge 228 rotates about pivot 240. Razor cartridge 228 includes a cutting plane 229. Cutting plane 229 is formed by the edges of blades 245 housed within razor cartridge 228.

First device 222 comprises a load cell 230. Load cell 230 measures a first or compression load 231 in a first direction 232 and a second or bending load 233 in a second direction 234 which is different from the first direction 232. Preferably, the second direction 234 is orthogonal to the first direction 232. First direction 232 and second direction 234 establish a reference frame for the apparatus 220.

Second device 224 comprises multiple displacement sensors. Second device 224 comprises first displacement sensor 236 and second displacement sensor 237. Sensors 236 and 237 measure the distance the cartridge 228 moves relative to the second direction 234. The distance the cartridge 228 moves can be used to calculate the angle $\Theta$ of cartridge 228 relative to the second direction 234.

From the measurements of the first or compression load 231, the second or bending load 233 and the angle $\Theta$, the normal load N and drag D on the cartridge 228 can be calculated. The drag D is the load placed on the cartridge 228 that is parallel to the cutting plane 229. The normal load N is the load placed on the cartridge 228 that is orthogonal to the cutting plane 229.

As the normal load N and drag D are applied to razor cartridge 228, razor cartridge 228 will rotate or swivel about pivot 240. Devices 222 and 224 together measure the first load 231, second load 233 and the angle $\Theta$ as the normal load N and drag D are applied to the cartridge 228.

In use a razor cartridge 228 is mounted on apparatus 220 which in turn is mounted on handle 226. As a user holds handle 226 and shaves with razor cartridge 228, first device 222 and second device 224 measure a plurality of inputs. These inputs comprise first load 231, second load 233 and angle $\Theta$. The measured inputs of first load, second load and distance are sent to and received by a processor such as processor 60 shown in FIG. 3.

The processor computes drag, normal load and friction based on the following formulas.

$$\text{Drag} = \text{second load 233 x cosine}(\Theta) + \text{first load 231 x sine}(\Theta)$$

$$\text{Normal Load} = \text{first load 231 x cosine}(\Theta) - \text{second load 233 x sine}(\Theta)$$

$$\text{Friction} = \text{Drag/Normal Load}$$

Using the apparatus 220 several razor cartridges can be evaluated and compared based on drag, normal load and/or friction.

Instead of connecting devices 222 and 224 to a processor directly with wires, the inputs can be sent by other methods. For example, the inputs can be temporarily stored in devices 222 and 224 and downloaded to a processor at a later time. The inputs may also be sent by first and second devices by wireless communication to the processor.

The first direction 232 and the second direction 234 may or may not extend through pivot 240. In the apparatus 220 of FIGS. 6-7 the first direction 232 and the second direction 234 extend through pivot 40.

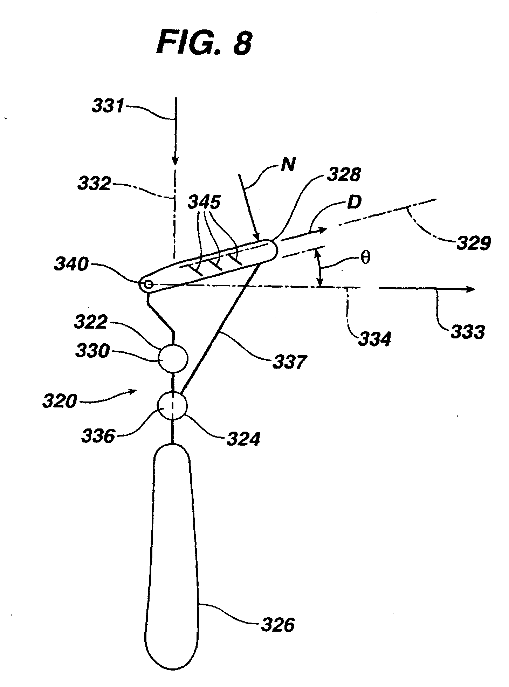

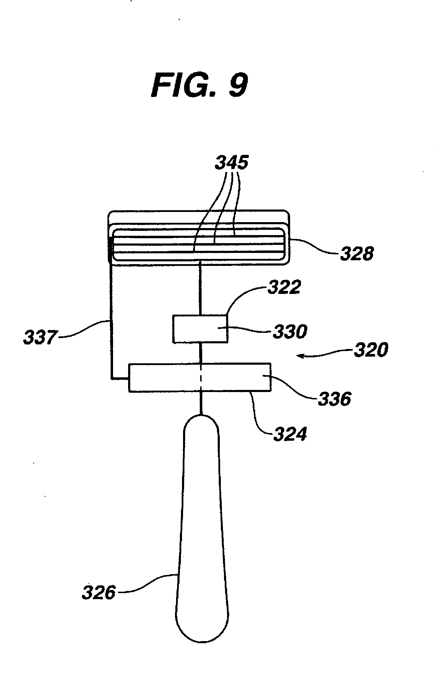

Referring now to FIGS. 8-9, there is shown another razor cartridge measurement apparatus 320. Apparatus 320 comprises a first device 322 and a second device 324. The apparatus 320 is shown mounted on a handle 326. A razor cartridge 328 is mounted on apparatus 320 opposite to the handle 326. Razor cartridge 328 rotates about pivot 340. Razor cartridge 328 includes a cutting plane 329. Cutting plane 329 is formed by the edges of blades 345 housed within razor cartridge 328.

First device 322 comprises a load cell 330. Load cell 330 measures a first or compression load 331 in a first direction 332 and a second or bending load 333 in a second direction 334 which is different from the first direction 332. Preferably, the second direction 334 is orthogonal to the first direction 332. First direction 332 and second direction 334 establish a reference frame for the apparatus 320.

Second device 324 comprises a potentiometer 336. Potentiometer 336 measure directly the angle $\Theta$ of cartridge 328 relative to the second direction 334. The potentiometer 336 is connected to cartridge 328 by a linkage 337.

From the measurements of the first or compression load 331, the second or bending load 333 and the angle $\Theta$, the normal load N and drag D on the cartridge 328 can be calculated. The drag D is the load placed on the cartridge 328 that is parallel to the cutting plane 329. The normal load N is the load placed on the cartridge 328 that is orthogonal to the cutting plane 329.

As the normal load N and drag D are applied to razor cartridge 328, razor cartridge 328 will rotate or swivel about pivot 340. Devices 322 and 324 together measure the first load 331, second load 333 and the angle $\Theta$ as the normal load N and drag D are applied to the cartridge 328.

In use a razor cartridge 328 is mounted on apparatus 320 which in turn is mounted on handle 326. As a user holds handle 326 and shaves with razor cartridge 328, first device 322 and second device 324 measure a plurality of inputs. These inputs comprise first load 331, second load 333 and angle Θ. The measured inputs of first load, second load and distance are sent to and received by a processor such as processor 60 shown in FIG. 3.

The processor computes drag, normal load and friction based on the following formulas.

$$\text{Drag} = \text{second load } 333 \text{ x cosine}(\Theta) - \text{first load } 331 \text{ x sine}(\Theta)$$

$$\text{Normal Load} = \text{first load } 331 \text{ x cosine}(\Theta) + \text{second load } 333 \text{ x sine}(\Theta)$$

$$\text{Friction} = \text{Drag/Normal Load}$$

Using the apparatus 320 several razor cartridges can be evaluated and compared based on drag, normal load and/or friction.

Instead of connecting devices 322 and 324 to a processor directly with wires, the inputs can be sent by other methods. For example, the inputs can be temporarily stored in devices 322 and 324 and downloaded to a processor at a later time. The inputs may also be sent by first and second devices by wireless communication to the processor.

The first direction 332 and the second direct 334 may or may not extend through pivot 340. In the apparatus 320 of FIGS. 8-9 the first direction 332 does not extend through pivot 240 while the second direction 334 does extend through pivot 340.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

All documents cited in the Detailed Description of the Invention are, in relevant part, incorporated herein by reference; the citation of any document is not to be construed as an admission that it is prior art with respect to the present invention. To the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the scope of the invention as defined in the claims.

**Claims**

1.   A razor cartridge measurement apparatus comprising:

a first device for measuring a first load applied to a razor cartridge in a first direction and a second load applied to said razor cartridge in a second direction different than said first direction; and
a second device for measuring an angle at which said razor cartridge is positioned relative to a predetermined direction.

2.   The apparatus of claim 1, wherein said first device comprises a load cell.

3.   The apparatus of claim 1, wherein said load cell measures two loads orthogonal to one another.

4.   The apparatus of claim 1, wherein said predetermined direction is said second direction.

**5.** The apparatus of claim 1, wherein said second direction is substantially orthogonal to said first direction.

**6.** The apparatus of claim 1, wherein said second device comprises a rotation sensor, a displacement sensor or multiple displacement sensors.

**7.** The apparatus of claim 1, said apparatus further comprising a processor for receiving inputs from said first device and said second device.

**8.** The apparatus of claim 7, wherein said processor computes a drag for said razor cartridge based on said inputs.

**9.** The apparatus of claim 7, wherein said processor computes a friction for said razor cartridge based on said inputs.

**10.** The apparatus of claim 7, wherein said processor computes a normal load for said razor cartridge based on said inputs.

**Patentansprüche**

**1.** Messgerät für Rasierklingeneinheiten, umfassend:

eine erste Vorrichtung zum Messen einer ersten Last, die in einer ersten Richtung auf eine Rasierklingeneinheit ausgeübt wird, und einer zweiten Last, die in einer zweiten Richtung, die sich von der ersten Richtung unterscheidet, auf die Rasierklingeneinheit ausgeübt wird, und
eine zweite Vorrichtung zum Messen eines Winkels, in dem die Rasierklingeneinheit relativ zu einer vorbestimmten Richtung angeordnet ist.

**2.** Gerät nach Anspruch 1, wobei die erste Vorrichtung eine Lastzelle umfasst.

**3.** Gerät nach Anspruch 1, wobei die Lastzelle zwei zueinander senkrechte Lasten misst.

**4.** Gerät nach Anspruch 1, wobei die vorbestimmte Richtung die zweite Richtung ist.

**5.** Gerät nach Anspruch 1, wobei die zweite Richtung im Wesentlichen senkrecht zu der ersten Richtung ist.

**6.** Gerät nach Anspruch 1, wobei die zweite Vorrichtung einen Rotationssensor, einen Wegmesssensor oder mehrere Wegmesssensoren umfasst.

**7.** Gerät nach Anspruch 1, wobei das Gerät ferner einen Prozessor zum Empfangen von Eingaben von der ersten Vorrichtung und der zweiten Vorrichtung umfasst.

**8.** Gerät nach Anspruch 7, wobei der Prozessor auf der Grundlage der Eingaben einen Widerstand für die Rasierklingeneinheit berechnet.

**9.** Gerät nach Anspruch 7, wobei der Prozessor auf der Grundlage der Eingaben eine Reibung für die Rasierklingeneinheit berechnet.

**10.** Gerät nach Anspruch 7, wobei der Prozessor auf der Grundlage der Eingaben eine Normallast für die Rasierklingeneinheit berechnet.

**Revendications**

**1.** Appareil de mesure de cartouche de rasoir comprenant :

un premier dispositif pour mesurer une première charge appliquée à une cartouche de rasoir dans une première direction et une deuxième charge appliquée à ladite cartouche de rasoir dans une deuxième direction différente de ladite première direction ; et
un deuxième dispositif pour mesurer un angle selon lequel ladite cartouche de rasoir est positionnée par rapport à une direction prédéterminée.

2. Appareil selon la revendication 1, dans lequel ledit premier dispositif comprend une cellule de charge.

3. Appareil selon la revendication 1, dans lequel ladite cellule de charge mesure deux charges orthogonales l'une par rapport à l'autre.

4. Appareil selon la revendication 1, dans lequel ladite direction prédéterminée est ladite deuxième direction.

5. Appareil selon la revendication 1, dans lequel ladite deuxième direction est essentiellement orthogonale à ladite première direction.

6. Appareil selon la revendication 1, dans lequel ledit deuxième dispositif comprend un capteur de rotation, un capteur de déplacement ou plusieurs capteurs de déplacement.

7. Appareil selon la revendication 1, ledit appareil comprenant en outre un processeur pour recevoir des entrées dudit premier dispositif et dudit deuxième dispositif.

8. Appareil selon la revendication 7, dans lequel ledit processeur calcule un tirage pour ladite cartouche de rasoir sur base desdites entrées.

9. Appareil selon la revendication 7, dans lequel ledit processeur calcule un frottement pour ladite cartouche de rasoir sur base desdites entrées.

10. Appareil selon la revendication 7, dans lequel ledit processeur calcule une charge normale pour ladite cartouche de rasoir sur base desdites entrées.

# FIG. 1

# FIG. 2

45

28

24

36

20

22

30

26

# FIG. 3

# FIG. 4

## FIG. 5

# FIG. 6

# FIG. 7

245

228

224 236

224 237

220

222 230

226

# FIG. 8

# FIG. 9

345

328

322

330

337

320

336

324

326

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004018161 A2

- FR 2749793 A1